# EUROPÄISCHE PATENTSCHRIFT

(11) **EP 0 977 936 B1**
(45) Veröffentlichungstag und Bekanntmachung des Hinweises auf die Patenterteilung: **12.06.2002**
(21) Anmeldenummer: 98925405.7
(22) Anmeldetag: 18.03.1998
(51) Int. Cl.: F02B 27/02

(54) **ANSAUGEINRICHTUNG**
SUCTION DEVICE
DISPOSITIF D'ASPIRATION

(30) Priorität: 24.04.1997 DE 19717349
(43) Veröffentlichungstag der Anmeldung: 09.02.2000
(73) Patentinhaber: SIEMENS AKTIENGESELLSCHAFT, 80333 München (DE)
(72) Erfinder: HAPPENHOFER, Werner, D-92442 Wackersdorf (DE); SCHEYTT, Mathias, D-93073 Neutraubling (DE); SCHMID, Stefan, D-93083 Obertraubling (DE); SCHWAIGER, Helmut, D-93055 Regensburg (DE)
(86) Internationale Anmeldenummer: DE9800797
(87) Internationale Veröffentlichungsnummer: WO9848154

(56) Entgegenhaltungen:
- EP-A- 0 026 935
- EP-A- 0 410 871
- EP-A- 0 701 057
- WO-A-95/16112
- WO-A-96/07022
- DE-A- 4 228 334
- DE-A- 4 337 975
- FR-A- 2 505 010
- US-A- 4 803 961
- US-A- 4 907 547

## Beschreibung

Die Erfindung betrifft eine Ansaugeinrichtung gemäß dem Oberbegriff der unabhängigen Patentansprüche , die insbesondere einer Brennkraftmaschine zugeordnet ist.

Aus der WO 96/07022 ist eine Ansaugeinrichtung bekannt, die Saugrohre umfaßt , die von einem ersten Sammler abzweigen und in Einlässe von Zylindern der Brennkraftmaschine münden. Die Saugrohre zweigen von einem ersten Sammler ab und münden in Einlässe von Zylindern der Brennkraftmaschine. Des weiteren hat die Ansaugeinrichtung Schaltklappen, die jeweils in einer Öffnung zwischen zwei Saugrohren angeordnet sind und schwenkbar gelagert sind. Wenn die Schaltklappen derart verschwenkt sind, daß die Öffnungen geschlossen sind, so entspricht die effektive Länge der Saugrohre, das heißt die Länge auf der die Gassäule im Saugrohr schwingt, der Länge der Saugrohre von dem ersten Sammler zu den Einlässen der Zylinder. Wenn die Schaltklappe derart verschwenkt ist, daß die Öffnung freigegeben ist, so entspricht die effektive Länge der Saugrohre dem Abstand von der Öffnung bis zu den Einlässen der Zylinder. Abhängig von Meßwerten der Betriebsgrößen der Brennkraftmaschine wird eine der zwei effektiven Längen der Saugrohre eingestellt. So kann die Aufladung der Zylinder verbessert werden und damit das maximale Drehmoment gesteigert werden.

An der Öffnung sind Anlagebünde vorgesehen, an denen die Schaltklappe zur Anlage kommt, wenn sie derart verschwenkt ist, daß die Öffnung geschlossen ist.

Immer strengere gesetzliche Vorschriften gelten, die Grenzwerte für die Amplitude der von einem Kraftfahrzeug erzeugten Schallwellen festlegen.

Aus der WO-A-9516112 ist eine Ansaugeinrichtung für eine Brennkraftmaschine mit Schaltklappen bekannt, die auf einer Welle angeordnet sind. Ferner ist eine Lagerbuchse vorgesehen, die ein federndes Kontaktelement umfasst. Die Lagerbuchse und das federnde Kontaktelement sind einstückig ausgebildet und aus Kunstharz geformt.

Die Aufgabe der Erfindung ist, die Ansaugeinrichtung so weiterzubilden, daß in allen Betriebszuständen einer Brennkraftmaschine das Erzeugen von Geräuschen verringert wird.

Die Aufgabe wird erfindungsgemäß durch die Merkmale des unabhängigen Anspruchs gelöst.

Die Erfindung zeichnet sich dadurch aus, dass ein separates ringförmig ausgebildetes Dämpfungsmittel in die Lagerbuchse eingebracht ist. Schläge, die durch das Schlagen der Welle gegen die Lagerbuchse erzeugt werden , werden so gedämpft. Die Übertragung von Geräuschen, die durch das Schlagen der Welle gegen die Lagerbuchse erzeugt werden, auf die Ansaugeinrichtung und die Umgebung eines Kraftfahrzeugs, in dem die Ansaugeinrichtung angeordnet ist, werden zudem gedämpft.

In einer vorteilhaften Ausgestaltung der Erfindung hat die Schaltklappe eine erste und zweite Dichthaube, die an den gegenüberliegenden axialen Enden der Schaltklappe konzentrisch zu der Welle angeordnet sind. Die Dichthauben gewährleisten, daß die Schaltklappe in radialer Richtung um die Welle herum die Öffnung zuverlässig dicht verschließt. Außerdem erfolgt ein axialer Spielausgleich, so daß Fertigungstoleranzen ausgeglichen werden und eine zuverlässige Funktion der Drosselklappe in einem weiten Temperaturbereich bei stets vorhandener Dichtigkeit gewährleistet ist. Außerdem gewährleistet die Dichthaube eine zusätzliche akustische Entkopplung der Schaltklappe von der Ansaugrichtung.

Weitere vorteilhafte Ausgestaltungen der Erfindung sind in den Unteransprüchen gekennzeichnet. Mehrere Ausführungsbeispiele der Erfindung sind im folgenden unter Bezugnahme auf die schematischen Zeichnungen näher erläutert. Es zeigen:
- Figur 1: eine Brennkraftmaschine,
- Figur 2: einen Schnitt der Brennkraftmaschine gemäß Figur 1 längs der Schnittlinie II - II'
- Figur 3: eine Schaltklappe,
- Figur 4: eine Ausschnittsvergrößerung der Schaltklappe längs eines Schnittes entlang der Drehachse der Schaltklappe,
- Figur 5: eine weitere Ausschnittsvergrößerung der Schaltklappe in einer Schnittbilddarstellung,
- Figur 6: einen Schnitt längs einer Schnittlinie III - III' der Brennkraftmaschine gemäß Figur 1,
- Figur 7: eine Ausschnittsvergrößerung der Ansaugeinrichtung.

Elemente gleicher Funktion und Konstruktion werden figurenübergreifend mit den gleichen Bezugszeichen gekennzeichnet.

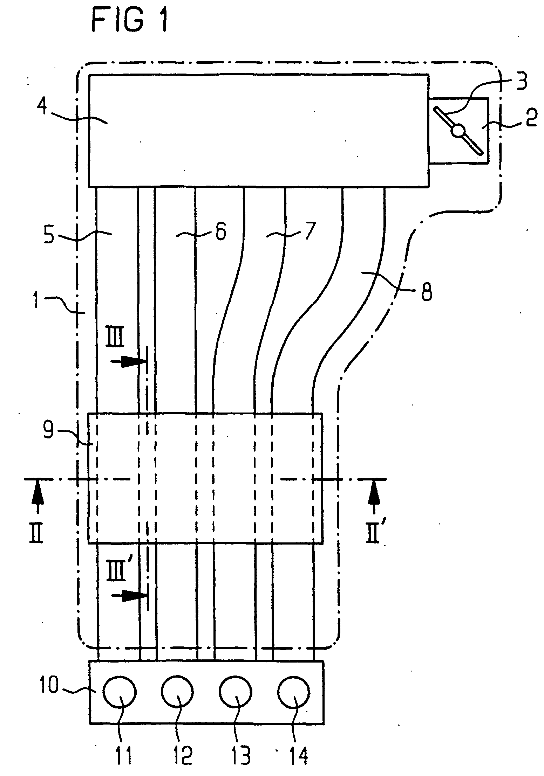

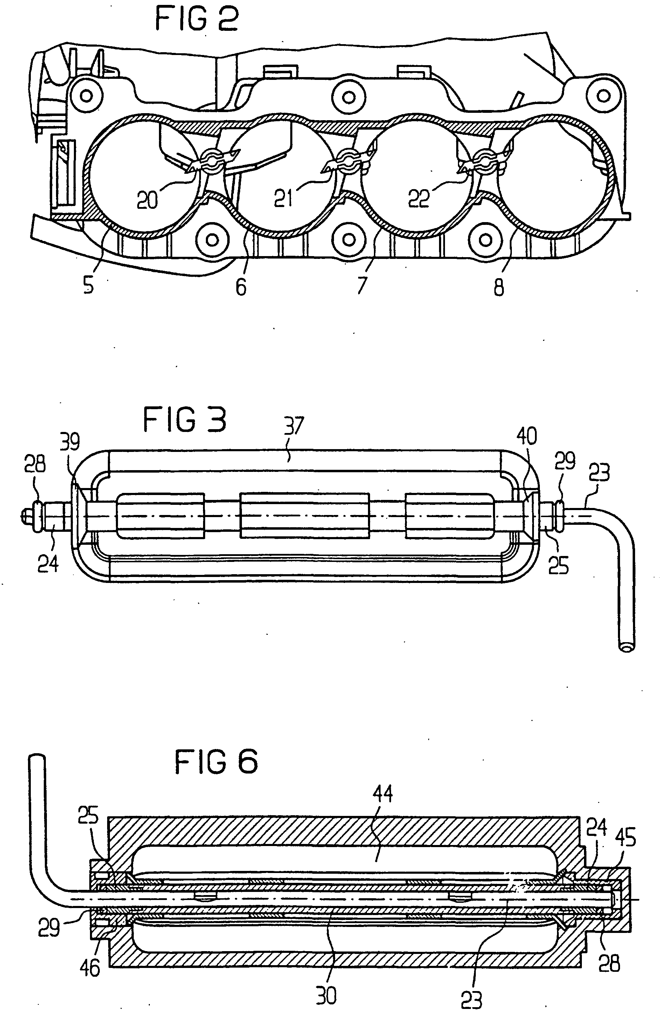

Eine Ansaugeinrichtung 1 (Figur 1) einer Brennkraftmaschine umfaßt einen Ansaugstutzen 2, in dem eine Drosselklappe 3 angeordnet ist. Ein erster Sammler 4 kommuniziert über den Ansaugstutzen 2 mit der Umgebungsluft. Saugrohre 5, 6, 7, 8 sind von dem ersten Sammler 4 über einen zweiten Sammler 9 zu Einlässen der Zylinder 11, 12, 13, 14 geführt. Die Zylinder 11, 12, 13, 14 sind in einem Motorblock 1.0 angeordnet. Im Bereich des zweiten Sammlers 9 sind Schaltklappen 20, 21, 22 angeordnet, die langgesteckt ausgebildet sind und schwenkbar gelagert sind (Figur 2). Abhängig von einer Betriebsgröße wie zum Beispiel einer Drehzahl N einer nicht dargestellten Kurbelwelle und/oder eines Luftmassenstroms und/oder eines Saugrohrdrucks werden die Schaltklappen 20, 21, 22 in eine Offenstellung oder eine Schließstellung verschwenkt. Betriebszustände der Brennkraftmaschine sind beispielsweise der Motorstart, der Leerlauf, die Teillast oder die Vollast.

In der Offenstellung der Schaltklappen 20, 21, 22 kommunizieren die Saugrohre 5, 6, 7, 8 über die Öffnungen miteinander, so daß die effektive Saugrohrlänge, das heißt der Bereich mit durchgehender Strömung im Saugrohr, dem Abstand der Öffnungen zu den Einlässen der Zylinder 11, 12, 13, 14 entspricht. In der Schließstellung der Schaltklappen verschließen die Schaltklappen die Öffnungen zwischen den Saugrohren 5, 6, 7, 8, so daß die effektive Länge der Saugrohre der Länge der Saugrohre von dem ersten Sammler 4 bis zu den Einlässen der Zylinder 11, 12, 13, 14 entspricht.

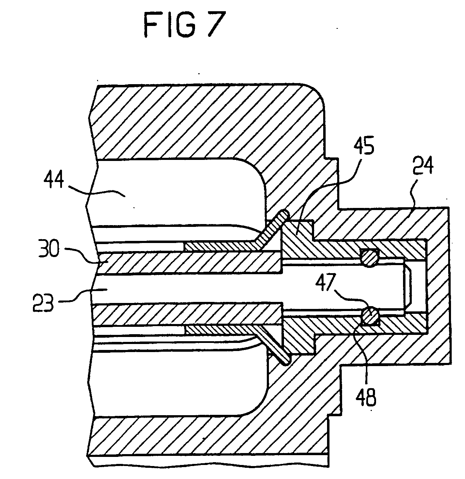

Der Aufbau der Schaltklappen 20, 21, 22 ist identisch. Im folgenden wird exemplarisch der Aufbau der Schaltklappe 20 beschrieben. Die Schaltklappe 20 (Figur 3) weist eine Welle 23 auf, die an einem freien Ende rechtwinklig abgekröpft ist. Dadurch ist ein einfaches Verschwenken zwischen der Offenstellung und der Schließstellung im eingebauten Zustand über ein nicht dargestelltes Gestänge möglich, das von einem ebenfalls nicht dargestellten Stellglied angetrieben wird. Das Stellglied ist vorzugsweise eine Druckdose oder ein Elektromotor. Auf die Welle 23 sind in einem vorgegebenen Abstand eine erste Hülse 24 und eine zweite Hülse 25 aufgebracht. Die erste und zweite Hülse 24, 25 sind paßgenau ausgeführt und dienen zur Lagerung in einer Lagerbuchse 45, 46 (Figur 6). Ein erstes und ein zweites Dämpfungsmittel sind so auf die Welle 23 aufgebracht, daß sie mit der ersten beziehungsweise der zweiten Hülse 24, 25 zur Anlage kommen. Die Dämpfungsmittel sind vorzugsweise identisch ausgebildet. Die Dämpfungsmittel sind vorteilhaft als ein Dämpfungsring 28, 29 ausgebildet. Die Reibung zwischen dem Dämpfungsmittel und der Lagerbuchse ist ist dann gering. Der Dämpfungsring besteht aus einem Elastomer-Kunststoff.

Die Welle 23 ist formschlüssig mit einem Flügelkörper 30 verbunden. Der Formschluß wird durch Prägenasen 23a,b bewirkt. Die Welle 23 und der Flügelkörper 30 sind demnach starr verbunden. Der Flügelkörper 30 ist darüberhinaus mit Aussparungen 31, 32, 33, 34 versehen. Eine Dichtmasse ist um den Flügelkörper 30 gespritzt und so ausgebildet, daß sie randseitig der Schaltklappe eine Dichtlippe 37 bildet, die im Schließzustand mit einem Anlagebund der Öffnung zur Anlage kommt und die Öffnung somit dicht verschließt. Darüberhinaus bildet die Dichtmasse eine erste und eine zweite Dichthaube 39, 40, die an den gegenüberliegenden axialen Enden der Schaltklappe 20 konzentrisch zu der Welle 23 angeordnet sind. Die Dichthauben 39, 40 sind jeweils zu der Seite hin offen, die der Schaltklappe 20 abgewandt ist. Auf der Seite, die der Schaltklappe zugewandt ist, sind sie formschlüssig mit der Schaltklappe verbunden.

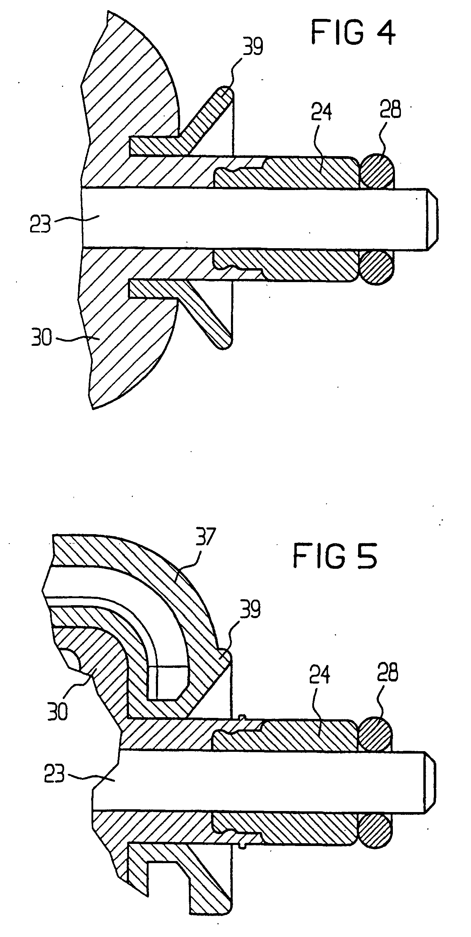

Figur 4 zeigt eine Detailvergrößerung der Schaltklappe 20 in einem Schnitt längs der Drehachse der Schaltklappe. Die Dichthaube 39 ist kegelförmig ausgebildet. Sie ist aus elastischem Material, vorzugsweise aus einem Elastomerkunststoff. Die Dichthaube 39 kann vorteilhaft auch paraboloidförmig, halbkugelförmig oder zylinderförmig ausgebildet sein.

Figur 5 zeigt eine bevorzugte Ausführungsform der Schaltklappe 20 in einer. Detailvergrößerung in einer Schnittbilddarstellung längs der Drehachse der Schaltklappe 20. Die Dichthaube 39 ragt in Form einer Wulst über die Dichtlippe 37 hinaus.

Figur 6 ist eine Schnittdarstellung längs einer Schnittlinie III - III' gemäß Figur 1. In eine Öffnung 44 und eine erste Lagerbuchse 45 und eine zweite Lagerbuchse 46 ist die Schaltklappe 20 eingebracht. Die erste und zweite Lagerbuchse 45, 46 sind vorzugsweise aus Bronze gefertigt und paßgenau zu der ersten und zweiten Hülse 24, 25. Die Schaltklappe ist in Figur 6 in ihrem Offenzustand dargestellt. Die erste und die zweite Dichthaube 39, 40 sind gegen die erste beziehungsweise die zweite Lagerbuchse 45, 46 gepreßt, können jedoch aufgrund ihrer Elastizität abhängig vom Anpreßdruck nach außen wandern. So wird mit einfachen Mitteln eine axiale Dichtung der Schaltklappe um die Lagerbuchse herum bewirkt. Durch die axiale Dichtung wird gewährleistet, daß Druckpulsationen im Schließzustand der Schaltklappe 20 nicht von dem Saugrohr 5 auf das Saugrohr 6 und umgekehrt übertragen werden. Durch die erste und zweite Dichthaube 39, 40 erfolgt des weiteren ein axialer Spielausgleich mit einer schwimmenden Lagerung. Dadurch ist gewährleistet, daß die Schaltklappe 20 temperaturunabhängig und unabhängig von Fertigungstoleranzen mittig in der Öffnung 44 gelagert ist. Die Dichthaube 39, 40 dämpft darüber hinaus durch Vibrationen der Brennkraftmaschine hervorgerufene und von der ersten oder zweiten Lagerbuchse 45, 46 und der ersten beziehungsweise zweiten Hülse 24, 25 erzeugten Geräusche. Die Dichthaube 39, 40 dämpft darüber hinaus ein Überstromgeräusch, das durch ein Klappern der Schaltklappe 20 und Druckunterschieden zwischen den Saugrohren 5, 6 hervorgerufen wird, stark ab. Dies ist ein gewichtiger Vorteil, da, das Überstromgeräusch als unangenehmes Pfeifen hörbar wird und immer strengere gesetzliche Vorschriften gelten, die Grenzwerte für die Amplitude der von einem Kraftfahrzeug erzeugten Schallwellen festlegen.

Figur 7 stellt eine Ausschnittsvergrößerung der Figur 6 in einer alternativen Ausführungsform der Ansaugeinrichtung dar. Die Welle 23 ist im Bereich, in dem sie in der Lagerbuchse gelagert ist, paßgenau zu der Lagerbuchse 45 ausgebildet. Das Dämpfungsmittel ist als Dämpfungsring 47 ausgebildet, der in eine Nut 48 der zweiten Lagerbuchse 45 eingebracht ist.

Die Flügelklappe kann alternativ auch drei oder vierarmig ausgebildet sein.
Die Erfindung ist nicht auf die hier dargestellten Ausführungsbeispiele beschränkt.

## Patentansprüche

1. Ansaugeinrichtung für eine Brennkraftmaschine mit:
- einem ersten Sammler (4), der über einen Ansaugstutzen (2) Umgebungsluft ansaugt,
- Saugrohren (5,6,7,8) , die von dem ersten Sammler (4) zu Einlässen der Zylinder (11, 12, 13, 14) der Brennkraftmaschine geführt sind, die in einem Abschnitt zwischen dem ersten Sammler (4) und den Zylindern (11, 12, 13, 14) eng aneinandergrenzen und die in ihrer Wandung einander zugewandte, aneinandergrenzende Öffnungen (44) aufweisen,
- mindestens einer Schaltklappe (20, 21, 22) mit einer Welle (23), und
- einer Schalteinrichtung, die mittels der mindestens einen Schaltklappe (20, 21, 22) die Öffnungen (44) verschließt oder öffnet, **dadurch gekennzeichnet, daß** eine Lagerbuchse (44,45) vorgesehen ist, in der die Welle (23) gelagert ist und in die ein separates ringförmig ausgebildetes Dämpfungsmittel eingebracht ist.

2. Ansaugeinrichtung nach Anspruch 1, **dadurch gekennzeichnet, daß** das Dämpfungsmittel auf der Welle angeordnet ist.

3. Ansaugeinrichtung nach Anspruch 1 oder 2, **dadurch gekennzeichnet, daß** das Dämpfungsmittel aus einem Elastomer besteht.

4. Ansaugeinrichtung nach einem der Ansprüche 1 bis 3, **dadurch gekennzeichnet, daß** die Schaltklappe (20, 21, 22) eine erste und eine zweite Dichthaube (39, 40) hat, die an den gegenüberliegenden axialen Enden der Schaltklappe (20, 21, 22) konzentrisch zu der Welle (23) angeordnet sind und die jeweils zu der Seite hin offen sind, die der Schaltklappe (20, 21, 22) abgewandt ist, und auf der Seite, die der Schaltklappe (20, 21, 22) zugewandt ist, mit der Schaltklappe (20, 21, 22) formschlüssig verbunden sind.

5. Ansaugeinrichtung nach Anspruch 4, **dadurch gekennzeichnet, daß** die Schaltklappe (20, 21, 22) mit einer Dichtlippe (37) versehen ist, die randseitig an der Schaltklappe (20, 21, 22) angeordnet ist und einstückig mit der ersten und zweiten Dichthaube (39, 40) ausgebildet ist.

6. Ansaugeinrichtung nach Anspruch 5, **dadurch gekennzeichnet, daß** die Dichthauben (39, 40) in Form einer Wulst über die Dichtlippe (37) hinausragen.

7. Ansaugeinrichtung nach einem der Ansprüche 4 bis 6, **dadurch gekennzeichnet, daß** die erste und die zweite Dichthaube (39, 40) aus einem Elastomer bestehen.

## Claims

1. Intake device for an internal combustion engine, having:
- a first manifold (4), which draws in ambient air through an intake port (2),
- suction pipes (5, 6, 7, 8) which run from the first manifold (4) to intakes of the cylinders (11, 12, 13, 14) of the internal combustion engine, are closely contiguous to each other in one section between the first manifold (4) and the cylinders (11, 12, 13, 14), and have orifices (44) in their walls which are adjacent to and turned toward each other,
- at least one control flap (20, 21, 22) with a shaft (23), and
- a switching system which closes or opens the orifices (44) by means of the at least one control flap (20, 21, 22), **characterised in that** there is a bearing bush (44, 45) in which the shaft (23) is supported, and into which a separate ring-shaped damping element is inserted.

2. Intake device according to Claim 1, **characterised in that** the damping element is located on the shaft.

3. Intake device according to Claim 1 or 2, **characterised in that** the damping element consists of an elastomer.

4. Intake device according to one of Claims 1 to 3, **characterised in that** the control flap (20, 21, 22) has a first and a second sealing hood (39, 40) which are disposed on the opposing axial ends of the control flap (20, 21, 22) concentric to the shaft (23) and which are open to the side that is turned away from the control flap (20, 21, 22), and on the side that is turned toward the control flap (20, 21, 22) they are joined to the control flap (20, 21, 22) in a form-fit connection.

5. Intake device according to Claim 4, **characterised in that** the control flap (20, 21, 22) has a sealing lip (37) which is located on the edge of the control flap (20, 21, 22) and is made as a single piece with the first and second sealing hoods (39, 40).

6. Intake device according to Claim 5, **characterised in that** the sealing hoods (39, 40) project over the sealing lip (37) in the form of a bulge.

7. Intake device according to one of Claims 4 to 6, **characterised in that** the first and the second sealing hoods (39, 40) consist of an elastomer.

## Revendications

1. Dispositif d'aspiration pour un moteur à combustion interne comportant :
- un premier collecteur (4), qui aspire de l'air environnant par une tubulure d'aspiration (2),
- des tubes d'aspiration (5, 6, 7, 8) s'étendent du premier collecteur (4) aux entrées des cylindres (11, 12, 13, 14) du moteur à combustion interne, qui dans une partie située entre le premier collecteur (4) et les cylindres (11, 12, 13, 14) sont contigus et qui comportent dans leur paroi des ouvertures contiguës (44) tournées les unes vers les autres,
- au moins un papillon de commutation (20, 21, 22) comportant un arbre (23), et
- un dispositif de commutation qui, au moyen du papillon (20, 21, 22) au nombre d'au moins un, ferme ou ouvre les ouvertures (44), **caractérisé en ce qu'**il est prévu un coussinet (44, 45), dans lequel est monté l'arbre (23) et dans lequel est placé un moyen d'amortissement séparé ayant la forme d'un anneau.

2. Dispositif d'aspiration selon la revendication 1, **caractérisé en ce que** le moyen d'amortissement est placé sur l'arbre.

3. Dispositif d'aspiration selon la revendication 1 ou 2, **caractérisé en ce que** le moyen d'amortissement est constitué d'un élastomère.

4. Dispositif d'aspiration selon l'une des revendications 1 à 3, **caractérisé en ce que** le papillon (20, 21, 22) comporte un premier et un deuxième capot étanche (39, 40), qui sont placés aux extrémités axiales opposées du papillon (20, 21, 22) en étant concentriques avec l'arbre (23) et qui sont respectivement ouverts sur le côté opposé au papillon (20, 21, 22), et sont reliés de manière positive au papillon (20, 21, 22) sur le côté qui est tourné vers le papillon (20, 21, 22).

5. Dispositif d'aspiration selon la revendication 4, **caractérisé en ce que** le papillon (20, 21, 22) est pourvu d'une lèvre d'étanchéité (37), qui est disposée sur le bord du papillon (20, 21, 22) et forrne une seule pièce avec les premier et deuxième capots étanches (39, 40).

6. Dispositif d'aspiration selon la revendication 5, **caractérisé en ce que** les capots étanches (39, 40) font saillie sous forme d'un renflement sur la lèvre d'étanchéité (37).

7. Dispositif d'aspiration selon l'une des revendications 4 à 6, **caractérisé en ce que** les premier et deuxième capots étanches (39, 40) sont constitués d'un élastomère.
